# EUROPEAN PATENT APPLICATION

(11) **EP 4 703 229 A1**
(43) Date of publication of application: **04.03.2026**
(21) Application number: 24306281.7
(22) Date of filing: 30.07.2024
(51) Int. Cl.: B61D 27/00

(54) **RAILWAY CAR WITH AN EMERGENCY VENTILATION SYSTEM**

(71) Applicant: SpeedInnov, 75008 Paris (FR)
(72) Inventor: SERVAJEAN, Olivier, 17000 La Rochelle (FR); LE-MOUROUX, Hervé, 17340 Chatelaillon Plage (FR)
(74) Representative: Plasseraud IP

(57) **Abstract**

The railway car (14) comprises:
- a passenger compartment (20);
- an air conditioning system (26) comprising a first fan and a second fan configured for blowing air within the passenger compartment (20);
- a first power unit designed to draw power from a catenary (1);
- a second power unit comprising a battery and a battery charger able to charge the battery by drawing power from the catenary (1).

The first power unit is configured for powering the first fan and the second fan, the battery being configured for powering the second fan.

The railway car (14) being such that:
- when power from the catenary (1) is available, the first power unit powers the first fan and the second fan;
- when power from the catenary (1) is not available, the second power unit powers the second fan.

## Description

The present invention concerns a railway car of a railway vehicle comprising:
- at least one passenger compartment;
- at least an air conditioning system configured for conditioning the air within the at least one passenger compartment, the at least one air conditioning system comprising at least a first fan and at least a second fan configured for blowing air within the at least one passenger compartment;
- at least a first power unit designed to draw power from a catenary;
- at least a second power unit comprising a battery and a battery charger able to charge the battery by drawing power from the catenary.

In such a railway car, in case power from the catenary is unavailable, the ventilation of the passenger compartment cannot be carried out. This can happen for example when the railway vehicle transitions between two sections of the electrical grid with different voltages, when failures on the train make it impossible to draw power from the catenary or in case of power outage in the section of the electrical grid to which the vehicle is connected.

The lack of ventilation can lead to an increase of the CO₂ level and to the stagnation of unpleasant odors in the passenger compartment. This lead to discomfort for passenger accommodated within the passenger compartment.

There is therefore a need for a railway car wherein ventilation of the at least one passenger compartment can be carried out even in the case wherein power from the catenary is unavailable and thus to improve passenger comfort overall.

One aim of the invention is therefore to provide a railway car wherein the passenger comfort is enhanced.

To this aim, the subject matter of the invention is a railway car of the aforementioned type, wherein the at least one first power unit is configured for powering the at least one first fan and the at least one second fan, the battery being configured for powering the at least one second fan and in that:
- when power from the catenary is available, the at least one first power unit powers the at least one first fan and the at least one second fan;
- when power from the catenary is not available, the at least one second power unit powers the at least one second fan.

Thanks to these features, the ventilation of the passenger compartment can be carried out even if power from the catenary is unavailable.

The railway car according to the invention may comprise one or more of the following feature(s), taken solely or according to any technically feasible combination:
- when power from the catenary is not available, the at least one first fan is not powered;
- the railway car comprises a single air conditioning system;
- the at least one passenger compartment is delimited by a car body of the railway car, said car body being air tight,
the at least one air conditioning system comprising at least a third fan configured for extracting air from within the at least one passenger compartment and wherein:
- when power from the catenary is available, the at least one first power unit powers the at least one third fan so that the air flow rate entering the at least one passenger compartment is substantially equal to the air flow rate exiting the at least one passenger compartment;
- when power from the catenary is not available, the at least one third fan is not powered;
   - the railway car is such that:
- when power from the catenary is available, the at least one second fan blows air within the at least one passenger compartment at a first air flow rate;
- when power from the catenary is not available, the at least one second fan blows air within the at least one passenger compartment at a second air flow rate which is lower than the first air flow rate;
   - the railway car is a double-decker railway car, the at least one passenger compartment comprising a first portion at a first level and a second portion at a second level arranged above the first level, the at least one air conditioning system being configured for conditioning the air within the first and second portions;
   - the at least one air conditioning system comprises at least one air conditioning unit, in particular at least two air conditioning units, configured for adding thermal energy to or removing thermal energy from within the at least one passenger compartment, and wherein:
- when power from the catenary is available, the at least one first power unit powers the at least one air conditioning unit;
- when power from the catenary is not available, the at least one air conditioning unit is not powered;
   - the at least one first power unit is connected to the at least one air conditioning system by a medium voltage network having a voltage between 400 V and 1500 V;
   - the at least one second power unit, in particular the battery, is connected to the at least one air conditioning system by a low voltage network having a voltage between 24 V and 110 V.

The invention also concerns a railway vehicle comprising at least one railway car as described above.

The invention will be better understood, upon reading of the following description, given only as an example, and made in reference to the following figures in which:
- [Fig. 1] figure 1 is a schematic illustration of a railway vehicle according to the invention, in the case wherein power from the catenary is available;
- [Fig. 2] figure 2 is a schematic illustration of the railway vehicle of figure 1, in the case wherein power from the catenary is unavailable; and
- [Fig. 3] figure 3 is a schematic illustration of a railway car of the railway vehicle of figure 1, according to the invention.

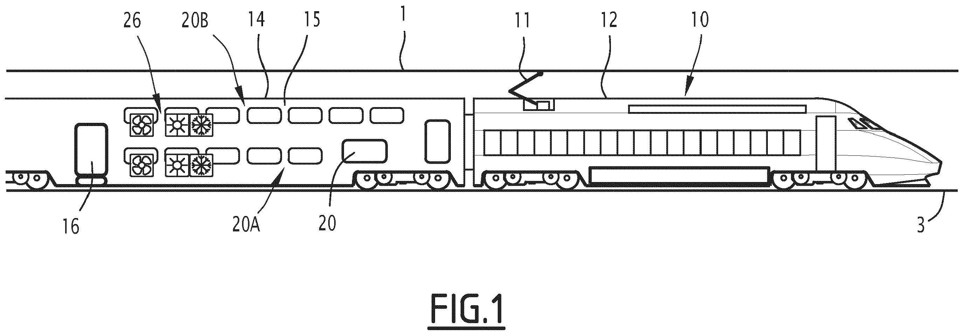

In the following, a railway vehicle 10 according to the invention is described in view of figures 1 to 3.

For example, the railway vehicle 10 is a train, a tramway, a metro or any other type of vehicle moving on rails and in particular adapted to draw power from a catenary 1.

The railway vehicle 10 comprises at least one railway car 14.

Advantageously, the railway vehicle 10 further comprises a power car 12 mechanically connected to the at least one railway car 14 and adapted to draw or push the at least one railway car 14 onto railway tracks 3.

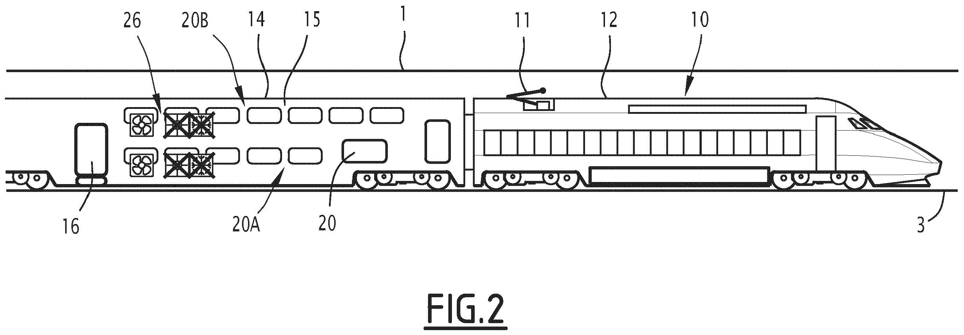

For example, as shown on figures 1 to 3, the railway vehicle 10 further comprises a pantograph 11 movable between:
- an extended configuration (figure 1) in which the pantograph 11 is in contact with the catenary 1 and in which the pantograph 11 receives electrical power from the catenary 1;
- a retracted configuration (figure 2) in which the pantograph 11 is away from the catenary 1.

For example, the pantograph 11 is mounted onto the power car 12. In a variant, the pantograph 11 is mounted onto the at least one railway car 14.

For example, the tension of the catenary 1 is between 0.75 kV and 25 kV.

As further discussed below, power from the catenary 1 may not be available, for example when:
- the pantograph 11 is in the retracted configuration;
- the railway vehicle 10 transitions between two sections of the electrical grid with different voltages;
- the railway vehicle 10 transitions between two substations (neutral section) ;
- failures on the railway vehicle 10 make it impossible to draw power from the catenary 1;
- there is a power outage in the section of the electrical grid to which the railway vehicle 10 is connected.

In the following, a single railway car 14 is described. Of course, the following description is also applicable to one or several of a plurality of railway cars 14 composing the railway vehicle 10.

The railway car 14 comprises at least one passenger compartment 20, at least an air conditioning system 26, at least a first power unit 50 and at least a second power unit 60.

Advantageously, the railway car 14 comprises a single air conditioning system 26.

As shown on the example of figures 1 to 3, the railway car 14 is a double-decker railway car.

The railway car 14 comprises a car body 15.

In the following, a single passenger compartment 20 is described. Of course, the following description is also applicable to one or several of a plurality of passenger compartments 20 when the railway car 14 comprises a plurality of passenger compartments 20.

The passenger compartment 20 is adapted to accommodate passengers.

Advantageously, the passenger compartment 20 is delimited by the car body 15, said car body 15 being air tight. In particular, except for the air entering and exiting the passenger compartment 20 thanks to the at least one air conditioning system 26, the passenger compartment 20 is air tight. In other terms, except for the air entering and exiting the passenger compartment 20 via the at least one air conditioning system 26, substantially no air from the surrounding environment penetrates the passenger compartment 20, in particular when boarding doors 16 of the railway car 14 are closed.

Advantageously, in view of figures 1 and 2, when the railway car 14 is a double-decker railway car, the passenger compartment 20 comprises a first portion 20A at a first level and a second portion 20B at a second level arranged above the first level.

In the following, a single air conditioning system 26 is described. Of course, the description is applicable to one or several of a plurality of air conditioning systems 26 in the case wherein the railway car 14 comprises a plurality of air conditioning systems 26.

The air conditioning system 26 is configured for conditioning the air within the passenger compartment 20. In particular, when the railway car 14 is a double-decker railway car, the air conditioning system 26 is configured for conditioning the air within the first and second portions 20A, 20B of the passenger compartment 20.

The air conditioning system 26 comprises at least a first fan 30 and at least a second fan 32 configured for blowing air within the passenger compartment 20, said blown air being for example drawn from the surrounding atmosphere of the car 14.

Advantageously, the air conditioning system 26 further comprises at least a third fan 34 configured for extracting air from within the passenger compartment 20, said sucked up air being for example ejected into the surrounding atmosphere of the car 14.

Advantageously again, the air conditioning system 26 further comprises at least one air conditioning unit 38, 40, in particular at least two air conditioning units 38, 40, configured for adding thermal energy to or removing thermal energy from the passenger compartment 20. In particular, the at least one air conditioning unit 38, 40 is configured for generating a heated or refrigerated stream of air and injecting said heated or refrigerated stream of air into the passenger compartment 20.

In the following, there is described an air conditioning system 26 comprising a single first fan 30 and a single second fan 32, and if applicable, a single third fan 34, a first air conditioning unit 38 and a second air conditioning unit 40. Of course, the invention is not limited to this case and the air conditioning system 26 may comprise several first fans 30 and/or several second fans 32 and/or several third fans 34 and/or several first air conditioning units 38 and/or several second air conditioning units 40.

For example:
- when power from the catenary 1 is available, the first fan 30 and the second fan 32 are on;
- when power from the catenary 1 is not available, the first fan 30 is not powered and the second fan 32 is on.

Advantageously:
- when power from the catenary 1 is available, the third fan 34 is on such that the air flow rate entering the passenger compartment 20 is substantially equal to the air flow rate exiting the passenger compartment 20;
- when power from the catenary 1 is not available, the third fan 34 is not powered.

For example, the air flow rate generated by the first fan 30 is substantially equal to or lower than 900 m³/h.

For example, the air flow rate generated by the second fan 32 is substantially equal to or lower than 900 m³/h.

For example, the air flow rate generated by the third fan 34 is substantially equal to or lower than 1800 m³/h.

Advantageously:
- when power from the catenary 1 is available, the second fan 32 blows air within the passenger compartment 20 at a first air flow rate;
- when power from the catenary 1 is not available, the second fan 32 blows air within the passenger compartment 20 at a second air flow rate which is lower than the first air flow rate. This makes it possible to prevent a too high overpressure within the passenger compartment 20 when power from the catenary 1 is not available (since when no power from the catenary is available, the third fan 34 is not powered and thus no extraction of air is carried out).

For instance, the first air conditioning unit 38 is configured for adding thermal energy to or removing thermal energy from the first portion 20A of the passenger compartment 20 and the second air conditioning unit 40 is configured for adding thermal energy to or removing thermal energy from the second portion 20B of the passenger compartment 20. Advantageously:
- when power from the catenary 1 is available, the at least one air conditioning unit 38, 40 is on;
- when power from the catenary 1 is not available, the at least one air conditioning unit 38, 40 is not powered.

In the following, a single first power unit 50 and a single second power unit 60 are described. Of course, the description is applicable to one or several of a plurality of first and second power units 50, 60 in the case wherein the railway car 14 comprises a plurality of first and second power units 50, 60.

The first power unit 50 is designed to draw power from the catenary 1, in particular via the pantograph 11.

The first power unit 50 is configured for powering the first fan 30 and the second fan 32, in particular via a battery charger 62 and a battery 64 , and in particular also the third fan 34.

In particular, the first power unit 50 is electrically connected to the air conditioning system 26, in particular to the first fan 30, to the battery charger 62 (which in particular allows to recharge battery 64 and to power the second fan 32), and if applicable to the third fan 34, the first air conditioning unit 38 and the second air conditioning unit 40, by a medium voltage network 52 having a voltage between 400 V and 1 500 V.

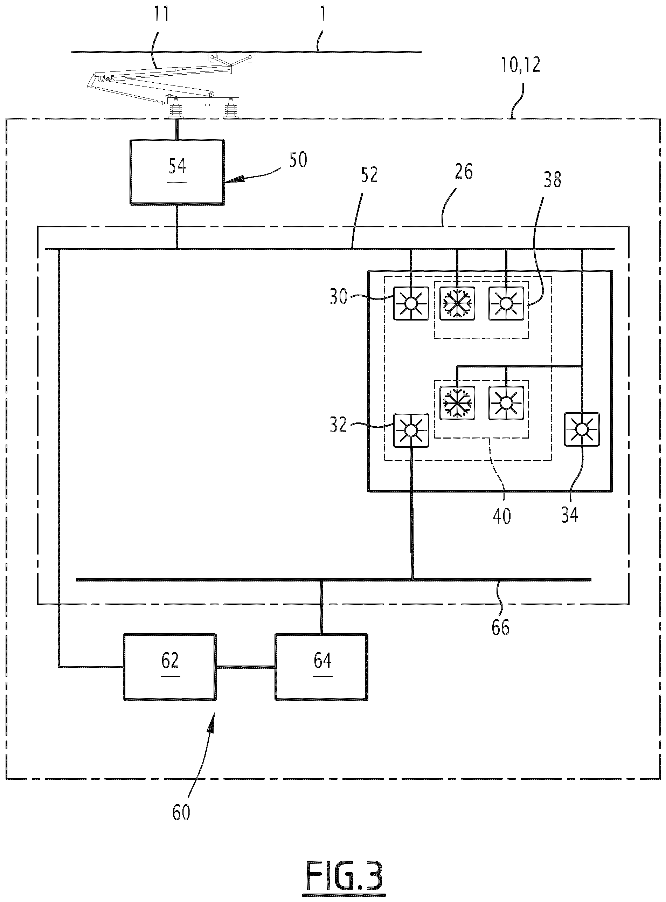

For instance, as shown on figure 3, a voltage converter 54 of the railway car 14 converts the tension of the catenary 1 into the tension of the medium voltage network 52.

When power from the catenary 1 is available, the first power unit 50 powers the first fan 30 and the second fan 32 in particular via the battery charger 62 and the battery 64.

In particular, the first power unit 50 is able to power the second fan 32 via the battery charger 62 and battery 64 of the second power unit 60.

When power from the catenary 1 is not available, the first power unit 50 does not power the first fan 30, the battery charger 62 and the second fan 32, and if applicable the third fan 34, the first air conditioning unit 38 and the second air conditioning unit 40.

The second power unit 60 comprises the battery 64 and the battery charger 62.

The battery charger 62 is able to charge the battery 64 by drawing power from the catenary 1, in particular via the first power unit 50.

For instance, the battery charger 62 is connected to the medium voltage network 52. The battery 64 is configured for powering the second fan 32.

In particular, the second power unit 60, in particular the battery 64, is connected to the air conditioning system 26 by a low voltage network 66 having a voltage between 24 V and 110 V.

Advantageously, when powered on, the second fan 32 is powered by the battery 64 via the network 66, with or without power from catenary 1.

When power from the catenary 1 is available, the battery charger 62 powers the battery 64 to recharge the battery 64.

When power from the catenary 1 is not available, the battery 64 is not recharged by the battery charger 62 and the second fan 32 is powered on by the battery 64 as long as the voltage of battery 64 allows it.

Thanks to the invention, the ventilation of the passenger compartment 20 can be carried out even if power from the catenary 1 is unavailable. In particular, the battery 64 of the second power unit 60 ensures a powering of the second fan 32 so that fresh air from around the railway car 14 is blown into the passenger compartment 20. This makes it possible to limit the increase in CO2 level, to eliminate odours and therefore to increase passenger comfort.

## Claims

1. A railway car (14) of a railway vehicle (10) comprising:
- at least one passenger compartment (20);
- at least an air conditioning system (26) configured for conditioning the air within the at least one passenger compartment (20), the at least one air conditioning system (26) comprising at least a first fan (30) and at least a second fan (32) configured for blowing air within the at least one passenger compartment (20);
- at least a first power unit (50) designed to draw power from a catenary (1);
- at least a second power unit (60) comprising a battery (64) and a battery charger (62) able to charge the battery (64) by drawing power from the catenary (1);
**characterized in that** the at least one first power unit (50) is configured for powering the at least one first fan (30) and the at least one second fan (32), the battery (64) being configured for powering the at least one second fan (32) and **in that**:
- when power from the catenary (1) is available, the at least one first power unit (50) powers the at least one first fan (30) and the at least one second fan (32);
- when power from the catenary (1) is not available, the at least one second power unit (60) powers the at least one second fan (32).

2. The railway car (14) according to claim 1, wherein when power from the catenary (1) is not available, the at least one first fan (30) is not powered.

3. The railway car (14) according to claim 1 or 2 , wherein the railway car (14) comprises a single air conditioning system (26).

4. The railway car (14) according to any one of the preceding claims, wherein the at least one passenger compartment (20) is delimited by a car body (15) of the railway car (14), said car body (15) being air tight,
the at least one air conditioning system (26) comprising at least a third fan (34) configured for extracting air from within the at least one passenger compartment (20) and wherein:
- when power from the catenary (1) is available, the at least one first power unit (50) powers the at least one third fan (34) so that the air flow rate entering the at least one passenger compartment (20) is substantially equal to the air flow rate exiting the at least one passenger compartment (20);
- when power from the catenary (1) is not available, the at least one third fan (34) is not powered.

5. The railway car (14) according to claim 4, wherein:
- when power from the catenary (1) is available, the at least one second fan (32) blows air within the at least one passenger compartment (20) at a first air flow rate;
- when power from the catenary (1) is not available, the at least one second fan (32) blows air within the at least one passenger compartment (20) at a second air flow rate which is lower than the first air flow rate.

6. The railway car (14) according to any one of the preceding claims, wherein the railway car (14) is a double-decker railway car, the at least one passenger compartment (20) comprising a first portion (20A) at a first level and a second portion (20B) at a second level arranged above the first level, the at least one air conditioning system (26) being configured for conditioning the air within the first and second portions (20A, 20B).

7. The railway car (14) according to any one of the preceding claims, wherein the at least one air conditioning system (26) comprises at least one air conditioning unit (38, 40), in particular at least two air conditioning units (38, 40), configured for adding thermal energy to or removing thermal energy from within the at least one passenger compartment (20), and wherein:
- when power from the catenary (1) is available, the at least one first power unit (50) powers the at least one air conditioning unit (38, 40);
- when power from the catenary (1) is not available, the at least one air conditioning unit (38, 40) is not powered.

8. The railway car (14) according to any one of the preceding claims, wherein the at least one first power unit (50) is connected to the at least one air conditioning system (26) by a medium voltage network (52) having a voltage between 400 V and 1500 V.

9. The railway car (14) according to any one of the preceding claims, wherein the at least one second power unit (60), in particular the battery (64), is connected to the at least one air conditioning system (26) by a low voltage network (66) having a voltage between 24 V and 110 V.

10. A railway vehicle (10) comprising at least one railway car (14) according to any one of the preceding claims.
